# EUROPEAN PATENT SPECIFICATION

(11) **EP 3 209 078 B1**
(45) Date of publication and mention of the grant of the patent: **07.04.2021**
(21) Application number: 15851141.0
(22) Date of filing: 13.10.2015
(51) Int. Cl.: H04W 72/12, H04W 28/02, H04L 5/00, H04W 84/12, H04W 88/08

(54) **METHOD AND DEVICE FOR ALLOCATING UPLINK TRANSMISSION RESOURCE ON BASIS OF BUFFER STATUS INFORMATION IN WIRELESS LAN**
VERFAHREN UND VORRICHTUNG ZUR ZUWEISUNG VON UPLINK-ÜBERTRAGUNGSRESSOURCEN AUF BASIS VON PUFFERZUSTANDSINFORMATIONEN IN EINEM WLAN
PROCÉDÉ ET DISPOSITIF D'ATTRIBUTION DE RESSOURCE DE TRANSMISSION EN LIAISON MONTANTE SUR LA BASE D'INFORMATIONS D'ÉTAT DE MÉMOIRE TAMPON DANS UN LAN SANS FIL

(30) Priority: 13.10.2014 US 201462063393 P
(43) Date of publication of application: 23.08.2017
(73) Proprietor: LG Electronics Inc., Seoul 07336 (KR)
(72) Inventor: RYU, Kiseon, Seoul 06772 (KR); KIM, Jeongki, Seoul 06772 (KR); CHUN, Jinyoung, Seoul 06772 (KR); PARK, Giwon, Seoul 06772 (KR); CHO, Hangyu, Seoul 06772 (KR); KIM, Suhwook, Seoul 06772 (KR)
(74) Representative: Plasseraud IP
(86) International application number: PCT/KR2015/010793
(87) International publication number: WO 2016/060448

(56) References cited:
- WO-A1-2005/039128
- WO-A1-2009/136830
- WO-A1-2014/107917
- WO-A2-2011/108832
- US-A1- 2007 117 569
- US-A1- 2011 216 659
- US-A1- 2012 176 984
- US-A1- 2013 235 773

## Description

### BACKGROUND OF THE INVENTION

### Field of the invention

The present invention relates to wireless communication and, most particularly, to a method and device for allocating uplink transmission resource on the basis of buffer status information in a wireless LAN.

### Related Art

Discussion for a next-generation wireless local area network (WLAN) is in progress. In the next-generation WLAN, an object is to 1) improve an institute of electronic and electronics engineers (IEEE) 802.11 physical (PHY) layer and a medium access control (MAC) layer in bands of 2.4 GHz and 5 GHz, 2) increase spectrum efficiency and area throughput, 3) improve performance in actual indoor and outdoor environments such as an environment in which an interference source exists, a dense heterogeneous network environment, and an environment in which a high user load exists, and the like.

An environment which is primarily considered in the next-generation WLAN is a dense environment in which access points (APs) and stations (STAs) are a lot and under the dense environment, improvement of the spectrum efficiency and the area throughput is discussed. Further, in the next-generation WLAN, in addition to the indoor environment, in the outdoor environment which is not considerably considered in the existing WLAN, substantial performance improvement is concerned.

In detail, scenarios such as wireless office, smart home, stadium, Hotspot, and building/apartment are largely concerned in the next-generation WLAN and discussion about improvement of system performance in a dense environment in which the APs and the STAs are a lot is performed based on the corresponding scenarios.

In the next-generation WLAN, improvement of system performance in an overlapping basic service set (OBSS) environment and improvement of outdoor environment performance, and cellular offloading are anticipated to be actively discussed rather than improvement of single link performance in one basic service set (BSS). Directionality of the next-generation means that the next-generation WLAN gradually has a technical scope similar to mobile communication. When a situation is considered, in which the mobile communication and the WLAN technology have been discussed in a small cell and a direct-to-direct (D2D) communication area in recent years, technical and business convergence of the next-generation WLAN and the mobile communication is predicted to be further active. WO 2014/107917 discloses communication methods wherein devices selectively transmit one or more local area buffer status reports by a macro base station over a macro link or transmit a macro buffer status report by a local area access point over a local area link in a dual connection deployment scenario in response to a cross link buffer status report trigger.

### SUMMARY OF THE INVENTION

### Technical Objects

An object of the present invention is to provide a method for allocating uplink transmission resource on the basis of buffer status information in a wireless LAN.

Another object of the present invention is to provide a device for allocating uplink transmission resource on the basis of buffer status information in a wireless LAN.

### Technical Solutions

In order to achieve the above-described technical object of the present invention, according to an aspect of the present invention, a method according to claim 1 is provided.

In order to achieve the above-described technical object of the present invention, according to another aspect of the present invention, an access point (AP) according to claim 2 is provided. In a further aspect, a method according to claim 3 is provided.

### EFFECTS OF THE INVENTION

By allocating uplink transmission resource to multiple STAs based on buffer status information of the multiple STAs, wireless LAN efficiency may be enhanced.

### BRIEF DESCRIPTION OF THE DRAWINGS

FIG. 1 is a conceptual view illustrating the structure of a wireless local area network (WLAN).
FIG. 2 is a conceptual view illustrating A-MSDU.
FIG. 3 is a conceptual view illustrating A-MPDU.
FIG. 4 illustrates a block ACK operation.
FIG. 5 is a conceptual view illustrating a block ACK frame according to an example useful for understanding of the present invention.
FIG. 6 is a conceptual view illustrating a block ACK frame according to an example useful for understanding of the present invention.
FIG. 7 is a conceptual view illustrating a block ACK frame according to an example useful for understanding of the present invention.
FIG. 8 is a conceptual view illustrating a block ACK frame according to an example useful for understanding of the present invention.
FIG. 9 is a conceptual view illustrating a method for triggering buffer status information according to an example useful for understanding of the present invention.
FIG. 10 is a conceptual view illustrating a method for transmitting buffer status information according to an embodiment of the present invention.
FIG. 11 is a conceptual view illustrating a frame structure according to an embodiment of the present invention.
FIG. 12 is a conceptual view illustrating a DL MU PPDU format according to an embodiment of the present invention.
FIG. 13 is a conceptual view illustrating a transmission of a UL MU PPDU according to an embodiment of the present invention.
FIG. 14 is a block view illustrating a wireless device to which the embodiments of the present invention can be applied.

### DESCRIPTION OF EMBODIMENTS

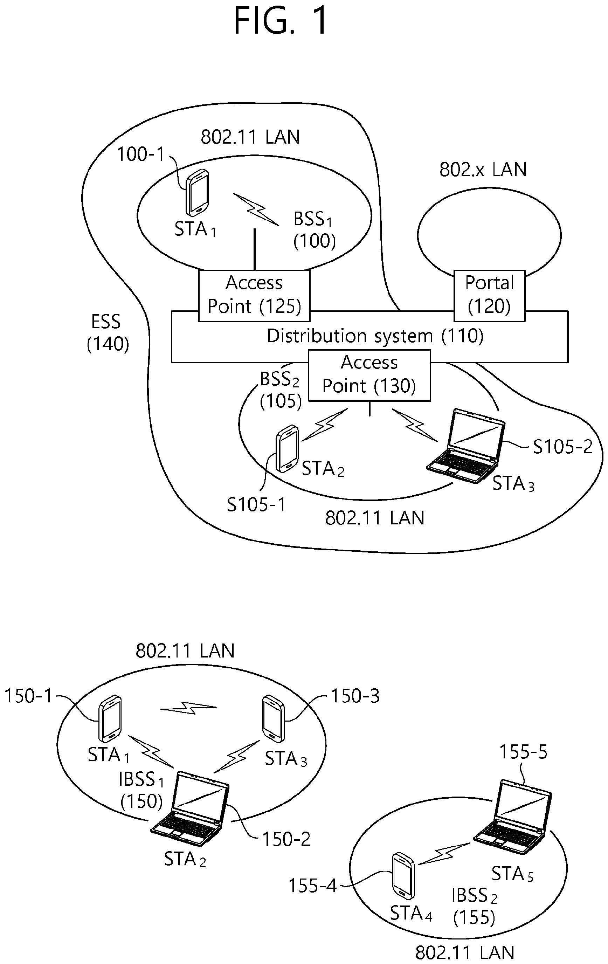

FIG. 1 is a conceptual view illustrating the structure of a wireless local area network (WLAN).

An upper part of FIG. 1 illustrates the structure of an infrastructure basic service set (BSS) of institute of electrical and electronic engineers (IEEE) 802.11.

Referring the upper part of FIG. 1, the wireless LAN system may include one or more infrastructure BSSs 100 and 105 (hereinafter, referred to as BSS). The BSSs 100 and 105 as a set of an AP and an STA such as an access point (AP) 125 and a station (STA1) 100-1 which are successfully synchronized to communicate with each other are not concepts indicating a specific region. The BSS 105 may include one or more STAs 105-1 and 105-2 which may be joined to one AP 130.

The BSS may include at least one STA, APs providing a distribution service, and a distribution system (DS) 110 connecting multiple APs.

The distribution system 110 may implement an extended service set (ESS) 140 extended by connecting the multiple BSSs 100 and 105. The ESS 140 may be used as a term indicating one network configured by connecting one or more APs 125 or 230 through the distribution system 110. The AP included in one ESS 140 may have the same service set identification (SSID).

A portal 120 may serve as a bridge which connects the wireless LAN network (IEEE 802.11) and another network (e.g., 802.X).

In the BSS illustrated in the upper part of FIG. 1, a network between the APs 125 and 130 and a network between the APs 125 and 130 and the STAs 100-1, 105-1, and 105-2 may be implemented. However, the network is configured even between the STAs without the APs 125 and 130 to perform communication. A network in which the communication is performed by configuring the network even between the STAs without the APs 125 and 130 is defined as an Ad-Hoc network or an independent basic service set (IBSS).

A lower part of FIG. 1 illustrates a conceptual view illustrating the IBSS.

Referring to the lower part of FIG. 1, the IBSS is a BSS that operates in an Ad-Hoc mode. Since the IBSS does not include the access point (AP), a centralized management entity that performs a management function at the center does not exist. That is, in the IBSS, STAs 150-1, 150-2, 150-3, 155-4, and 155-5 are managed by a distributed manner. In the IBSS, all STAs 150-1, 150-2, 150-3, 155-4, and 155-5 may be constituted by movable STAs and are not permitted to access the DS to constitute a self-contained network.

The STA as a predetermined functional medium that includes a medium access control (MAC) that follows a regulation of an Institute of Electrical and Electronics Engineers (IEEE) 802.11 standard and a physical layer interface for a radio medium may be used as a meaning including all of the APs and the non-AP stations (STAs).

The STA may be called various a name such as a mobile terminal, a wireless device, a wireless transmit/receive unit (WTRU), user equipment (UE), a mobile station (MS), a mobile subscriber unit, or just a user.

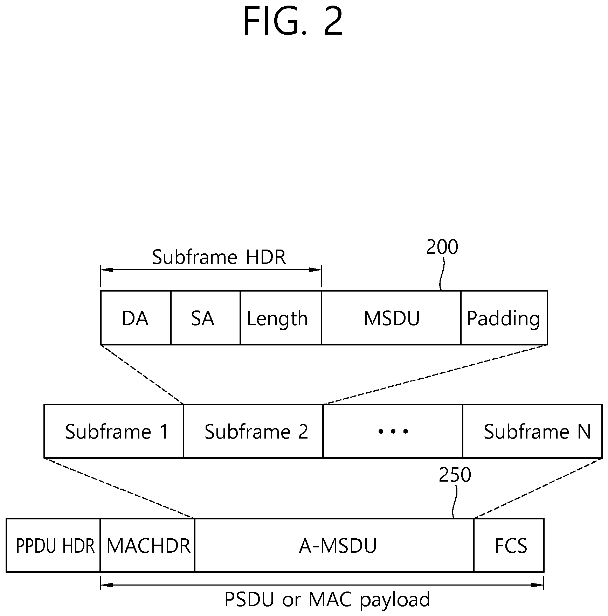

FIG. 2 is a conceptual view illustrating A-MSDU.

A method for performing aggregation on a data frame has been defined in order to reduce medium access control (MAC) error overhead in wireless LAN system. A MAC service data unit (MSDU) 200, which is generated in an application layer for the aggregation of a data frame, may be aggregated in a higher layer of the MAC layer and may then be generated as a single data unit. The MSDU, which is aggregated in the higher layer of the MAC layer, may be defined by the term aggregate-MSDU (A-MSDU) 250. The A-MSDU 350 may be generated based on an aggregation of multiple MSDUs 200 having the same priority level and receiver address (RA).

A plurality of A-MSDU sub-frames may be grouped to create (or generate) a single A-MSDU 250. More specifically, the A-MSDU 250 may include a plurality of A-MSDU sub-frames, and the A-MSDU sub-frame may include a sub-frame header, an MSDU, and padding bits. The sub-frame header may include a destination address (DA), a source address (SA), and an MSDU length. The padding bits may be used to configure a total length of the A-MSDU sub-frame to be equal to a predetermined multiple (a multiple of 4 octets).

Unlike the single MSDU, the A-MSDU 250 may be generated and transmitted as a QoS data MAC protocol data unit (MPDU) without being fragmented. For example, the STA may verify the presence or absence of an A-MSDU 250 within a quality of service (QoS) field of the MAC header of the receiving PPDU and may then de-aggregate the A-MSDU 250.

In case an ACK policy of the STA is set to a normal ACK, the A-MSDU 250 cannot be aggregated as an aggregate-MAC protocol data unit (A-MPDU). Additionally, whether or not the A-MSDU 250 can be aggregated to an A-MPDU may vary depending upon whether or not a block acknowledgement (ACK) agreement per traffic identifier (TID) is established. Moreover, even in a case when a block ACK agreement is established for a TID, in case an A-MSDU block ACK availability indicator of an add block acknowledgement (ADDBA) response frame of a receiving end corresponding to an add block acknowledgement (ADDBA) request frame indicates that a block ACK is not available for support, the A-MSDU 250 cannot be included in the A-MPDU.

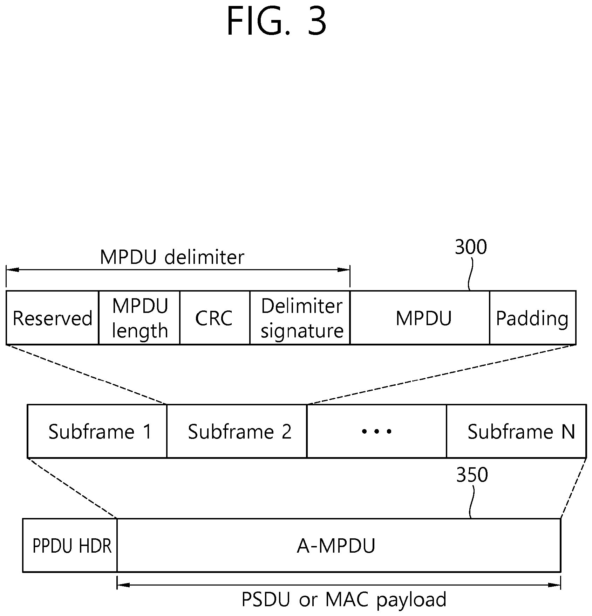

FIG. 3 is a conceptual view illustrating A-MPDU.

Referring to FIG. 3, a plurality of MPDUs 300 having the same receiver address (RA), and TID and ACK policy may form one A-MPDU 350 below the MAC layer.

The A-MPDU 350 may be constituted by one or more A-MPDU subframes and each A-MPDU subframe may include an MPDU delimiter and the MPDU 300. The MPDU delimiter may be used to determine whether an error occurs in the A-MPDU subframes constituting the A-MPDU 350. A plurality of A-MPDU subframes may form one A-MPDU 350.

Whether receiving the A-MPDU 350 is successful may be indicated based on the block ACK. The A-MPDU 350 may be formed only with respect to TID in which an HT-immediate BA agreement is made and values of duration/ID fields of the MPDU 300 constituting the A-MPDU 350 may be set to be the same as each other.

The A-MPDU (or MPDU) may be included in a physical layer (PHY) service data unit (PSDU). A PSDU and a PPDU header (PHY preamble and PHY header) may configure a PHY protocol data unit (PPDU). The A-MPDU (or MPDU) may be interpreted as the same data unit as a frame.

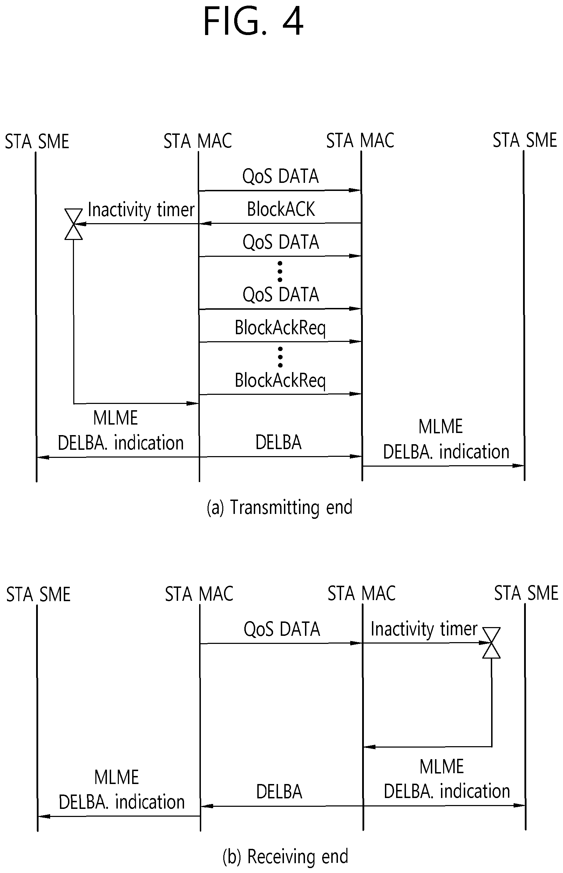

FIG. 4 illustrates a block ACK operation.

A block ACK mechanism is introduced to simultaneously make a response to a plurality of frames at the receiving side at the time of transmitting the plurality of frames during a TXOP period. When the block ACK mechanism is used, overhead may be reduced and efficiency of the MAC layer may be improved like the A-MSDU or A-MPDU.

Referring to FIG. 4, block ACK transmission for the A-MPDU of one TID may include a setup process, a transmission process, and a tear down process. The setup process may be a process of requesting and responding a block ACK session.

As an identifier that can be used by a higher layer, the TID may be used in order to identify an MSDU. For example, the TID may be given 16 different values, which are identified based on traffic stream (TS) and traffic category (TC). The TID may be allocated to the MSDU by a layer that is higher than the MAC layer. The TC may be used in order to identify MSDUs each having a different priority level. The TS may indicate a group of MSDUs being transmitted based on a specific traffic specification (TSPEC). The TSPEC may indicate quality of service (QoS) characteristics of a data flow between STAs.

In the transmission process, consecutive data may be transmitted and an aggregated response for the consecutive data may be received.

The tear down process may cancel the set up ACK session.

In detail, in the setup process, a transmitting side and the receiving side may transmit and receive the ADDBA request frame and the ADDBA response frame, respectively. In detail, the transmitting side may transmit the ADDBA request frame as a management frame to the receiving side. The ADDBA request frame may request a block ACK agreement for a current TID. The ADDBA request frame may transmit to the receiving side information on a block ACK policy type, a transmission buffer size at the transmitting side, a timeout value of the block ACK session, a starting sequence number (SSN), and the like. The receiving side that receives the ADDBA request frame may transmit the ADDBA response frame to the transmitting side as a response to the ADDBA request frame. The ADDBA response frame may include a block ACK agreement state, an ACK policy, a buffer size, and a timeout value.

In the transmission process, the transmitting side may transmit the A-MPDU. When a transmission condition of a block ACK request (BAR) frame for the A-MPDU is met, the transmitting side may transmit the BAR frame to the receiving side. When the transmitting side successfully transmits the A-MPDU, the receiving side that receives the BAR frame may transmit the block ACK for the A-MPDU to the transmitting side.

The tear down process may be performed when a set timeout value of an inactivity timer, which is set at the receiving side expires or there is no datum to be transmitted to the corresponding TID longer. For example, in order to recover the block ACK error, with the expiration of the set timeout value of the inactivity timer, a delete block acknowledgement (DELBA) frame may be transmitted to the receiving side or the transmitting side and the block ACK session may be terminated. When the transmitting side receives the block ACK, the inactivity timer at the transmitting side may be reset. When the receiving side receives the MPDU and the block ACK request frame, the inactivity timer at the receiving side may be reset.

A block ACK frame may include a block ACK start sequence control field and a block ACK bitmap.

The block ACK start sequence control field may include information on a data-unit sequence number that is indicated by a first bit included in the block ACK bitmap. In other words, the block ACK start sequence control field may include information on a starting sequence number (SSN), which corresponds to a data-unit sequence number that is indicated by a first bit included in the block ACK bitmap.

Each of the plurality of bits being included in the block ACK bitmap may indicate success or failure of a decoding performed on each of the plurality of data units (e.g., MSDUs). The first bit being included in the block ACK bitmap may indicate success or failure in a reception of a data unit corresponding to the sequence number indicated by the block ACK start sequence control field. The remaining bits being included in the block ACK bitmap may sequentially indicate success or failure in the decoding of data units corresponding to each of the remaining sequences. More specifically, an n-th bit being included in the block ACK bitmap may indicate success or failure in the reception of a data unit having a sequence number corresponding to SSN+n.

The block ACK bitmap may also have a compressed format. A bit that is included in the compressed format block ACK bitmap may also indicate success or failure in the reception of a plurality of data units (e.g., 64 MSDUs, A-MSDUs).

Additionally, the block ACK bitmap may not only include a block ACK bitmap corresponding to one TID but also include a block ACK bitmap corresponding to a plurality of TIDs in accordance with the configuration.

Hereinafter, in the embodiment of the present invention, data (or frame) being transmitted from the AP to the STA may be expressed by using the term downlink data (or downlink frame), and data (or frame) being transmitted from the STA to the AP may be expressed by using the term uplink data (or uplink frame). Also, transmission from the AP to the STA may be expressed by using the term downlink transmission, and transmission from the STA to the AP may be expressed by using the term uplink transmission. Also, each of a PHY protocol data unit (PPDU), frame, and data being transmitted through the downlink transmission may be respectively expressed by using the terms downlink PPDU, downlink frame, and downlink data. Furthermore, each of a PPDU, frame, and data being transmitted through the uplink transmission may be respectively expressed by using the terms uplink PPDU, uplink frame, and uplink data.

The PPDU may correspond to a data unit including a PPDU header and a physical layer service data unit (PSDU) (or MAC protocol data unit (MPDU)). The PPDU header may include a PHY header and a PHY preamble, and the PSDU (or MPDU) may correspond to a data unit including a frame (or information unit of a MAC layer) or indicating a frame. The PHY header may also be expressed differently by using the term physical layer convergence protocol (PLCP) header, and the PHY preamble may also be expressed differently by using the term PLCP preamble.

In a legacy wireless LAN system, an entire bandwidth has been used for the downlink transmission to one STA and the uplink transmission of one STA based on a single user (SU)-orthogonal frequency division multiplexing (OFDM) transmission. Also, in a wireless LAN system, the AP was capable of performing a downlink (DL) multi-user (MU) transmission based on MU multiple input multiple output (MIMO), and such transmission may be expressed by using the term DL MU MIMO transmission.

In the related art wireless LAN system, which did not support MU orthogonal frequency division multiple access (OFDMA) transmission, a multi-channel allocation method for allocating a wider bandwidth (e.g., a bandwidth exceeding 20MHz) to one user equipment was used. In case one channel unit is said to be equal to 20MHz, a multi-channel may include a plurality of 20MHz channels. In the multi-channel allocation method, a primary channel rule was used in order to allocate a wider bandwidth to the user equipment. In case the primary channel rule is used, limitations (or restrictions) in allocating a wider bandwidth to the user equipment exist. More specifically, according to the primary channel rule, in case a secondary channel, which is adjacent to the primary channel is 'busy' due to its usage in an overlapped BBS (OBBS), the STA cannot use the remaining channels excluding the primary channel. Therefore, since the STA can only transmit a frame through the primary channel, the STA undergoes restrictions in transmitting a frame through a multi-channel. Therefore, since the STA can transmit frames only through the primary channel, the STA undergoes restrictions in transmitting frames through a multi-channel. More specifically, the primary channel rule, which was used for multi-channel allocation in the legacy wireless LAN system may cause considerable restrictions in gaining a high throughput by managing a wide (or wider) bandwidth in the current wireless LAN environment, wherein a large number of OBBSs exist.

In order to resolve such problems, a wireless LAN system supporting the MU orthogonal frequency division multiple access (OFDMA) technology is disclosed in the embodiment of the present invention. In case the OFDMA technology is used, the multi-channel may be used by not just one user equipment but by multiple user equipments simultaneously without any restrictions caused by the primary channel rule. Therefore, since a wider bandwidth management is possible, the efficiency in the management of the wireless resources may be enhanced.

More specifically, in the wireless LAN system according to the embodiment of the present invention, the AP may perform DL MU transmission based on OFDMA, and such transmission may be expressed differently by using the term DL MU OFDMA transmission. In case of performing the DL MU OFDMA transmission, the AP may transmit downlink data (or downlink frame or downlink PPDU) to each of the plurality of STAs through each of the plurality of frequency resources within the overlapping time resource. The plurality of frequency resources may correspond to a plurality of subbands (or subchannels) or a plurality of resource units (RUs) (e.g., basic tone unit (BTU), small tone unit (STU)). The DL MU OFDMA transmission may be used along with the DL MU MIMO transmission. For example, DL MU MIMO transmission, which is based on a plurality of space-time streams (or spatial streams), may be performed within a specific subband (or subchannel) or resource unit, which is allocated for the DL MU OFDMA transmission.

The BTU, which is presented above as an example of the resource unit, may correspond to a resource unit having a relatively larger size (larger size resource unit) as compared to the STU. For example, the BTU may be defined to have the sizes of 52 tones, 56 tones, 114 tones, and so on. The BTU may be defined to have the same size regardless of the size of the bandwidth that is available for usage (e.g., 20MHz, 40MHz, 80MHz, 160MHz, etc.), or the BTU may be defined to have a size that is subordinate to the size of the bandwidth that is available for usage. For example, with an increase in the size of the bandwidth that is available for usage, the size of the BTU may also be defined to have a relatively larger size. Atone may be interpreted to have the same meaning as a subcarrier. The STU may correspond to the resource unit having the relatively smaller size (smaller size resource unit) as compared to the BTU. For example, the STA may be defined to have a size of 26 tones.

Additionally, in the wireless LAN system according to the embodiment of the present invention, uplink multi-user transmission (UL MU transmission), wherein a plurality of STAs transmit data to the AP within the time resource, may be supported. The uplink transmission, which is performed by each of the plurality of STAs within the overlapping time resource, may be performed within a frequency domain or a spatial domain. In case the uplink transmission, which is performed by each of the plurality of STAs, is performed within the frequency domain, different frequency resources may be respectively allocated to each of the plurality of STAs based on OFDMA. Each of the different frequency resources may correspond to different subbands (or subchannels) or different resource units (RUs) (e.g., basic tone unit (BTU), small tone unit (STU)). Each of the plurality of STAs may transmit uplink data to the AP through different frequency resources that are allocated. The above-described transmission method through different frequency resources may also be expressed differently by using the term UL MU OFDMA transmission method. In case the uplink transmission performed by each of the plurality of STAs is performed within the spatial domain, different space-time streams (or spatial streams) are allocated to each of the plurality of STAs, and, then, each of the plurality of STAs may transmit uplink data to the AP through different time-space streams. The above-described transmission method through different spatial streams may also be differently expressed by using the term UL MU MIMO transmission method. The UL MU OFDMA transmission may be performed along with the UL MU MIMO transmission. For example, UL MU MIMO transmission, which is based on a specific subband (or subchannel) that is allocated for the UL MU OFDMA transmission or a plurality of time-space streams (or space streams) within the resource unit, may be performed.

An example of a time-frequency structure that is assumed in the wireless LAN system according to the embodiment of the present invention may be given as shown below.

A fast fourier transform (FFT) size/inverse fast fourier transform (IFFT) size may be defined to be equal to N times (wherein N is an integer, e.g., N=4) of the FFT/IFFT sizes that were used in the legacy wireless LAN system. For example, 256FFT/IFFT may be applied for a bandwidth of 20MHz, 512FFT/IFFT may be applied for a bandwidth of 40MHz, 1024FFT/IFFT may be applied for a bandwidth of 80MHz, or 2048FFT/IFFT may be applied for a consecutive bandwidth of 160MHz or a non-consecutive bandwidth of 160MHz.

Subcarrier spacing may be equal to 1/N times (wherein N is an integer, e.g., 78.125kHz when N=4) of the subcarrier spacing that was used in the legacy wireless LAN system.

An inverse discrete fourier transform (IDFT)/discrete fourier transform (DFT) length (or valid symbol length) that is based on IDFT/DFT (or FFT/IFFT) may be equal to N times the IDFT/DFT length used in the legacy wireless LAN system. For example, in case the IDFT/DFT length is equal to 3.2µs and N=4 in the legacy wireless LAN system, the IDFT/DFT length in the wireless LAN system according to the embodiment of the present invention may be equal to 3.2 µs ^{∗}4(= 12.8 µs).

The length of an OFDM symbol may correspond to a value wherein a guard interval (GI) length is added to an IDFT/DFT length. The length of a GI may be equal to diverse values, such as 0.4µs, 0.8µs, 16µs, 2.4µs, and 3.2µs.

In the wireless LAN system, in order to allow the AP to allocate uplink transmission resources to the plurality of STAs, the AP should be informed of the buffer status of the STAs in advance. In case the AP cannot be informed of the buffer status of the STA, the AP may allocate an uplink transmission resource having a size that is unnecessarily larger than the size of the uplink data that are buffered to the STA, or the AP may allocate an uplink transmission resource having a size that is smaller than the size of the uplink data that are buffered to the STA. A larger or smaller allocation of uplink transmission resources as compared to the data size may reduce the wireless LAN efficiency.

In the embodiment of the present invention, buffer status information may be transmitted through a block ACK frame, which is transmitted by the STA via uplink. The block ACK frame merely corresponds to an example of a frame reporting (or including) the buffer status information. The buffer status information may be reported to the AP through other uplink frames (e.g., uplink control/management/data frames) in addition to the block ACK frame. The buffer status information may be transmitted through the uplink frame along with other uplink information, or the buffer status information may be transmitted through an uplink frame that is independently defined for transmitting a report on the buffer status information.

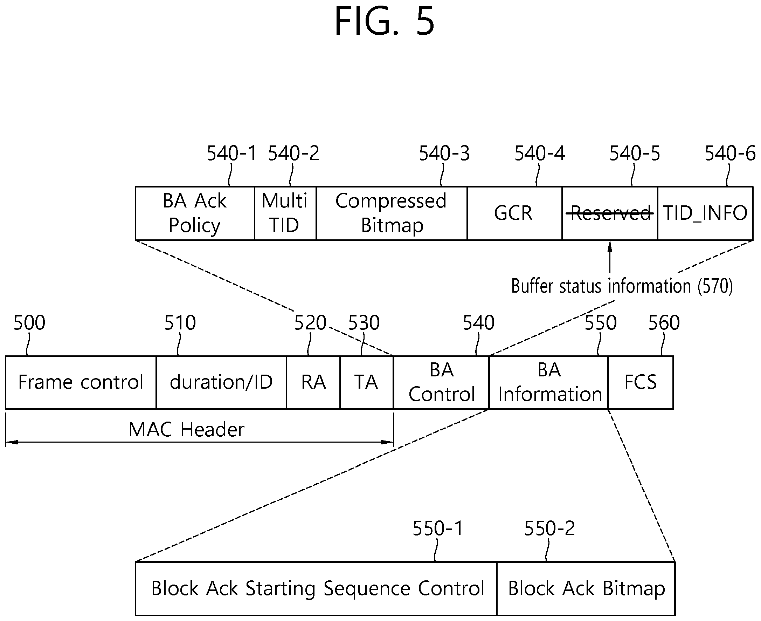

FIG. 5 is a conceptual view illustrating a block ACK frame according to an embodiment of the present invention.

FIG. 5 discloses a transmission of buffer status information through a reserved field that is included in the BA control field.

Referring to FIG. 5, the block ACK frame may include a frame control field 500, a duration/identifier (ID) field 510, a receiver address (RA) field 520, a transmitter address (TA) field 530, a block acknowledgement (BA) control field 540, BA information field 550, and a frame check sequence (FCS) 560.

The frame control field 500 may include identification information of the frame, power management information, and information on the presence or absence of additional data.

The duration/ID field 510 may include information on a time resource for transmitting the block ACK frame (e.g., information on a transmission opportunity (TXOP) duration).

The RA field 520 may include an address of an AP receiving the block ACK frame.

The TA field 530 may include an address of an STA transmitting the block ACK frame.

The BA control field 540 may include a block ACK policy (BA policy) field 540-1 , a multi-TID field 540-2, a compressed bitmap field 540-3, a groupcast with retries (GCR) field 540-4, a reserved field 540-5, and a TID INFO field 540-6.

More specifically, the BA policy field 540-1 may include information on whether or not the block ACK frame is transmitted immediately after receiving the downlink data frame.

The multi-TID field 540-2 may include information on whether or not acknowledgement (ACK)/non-acknowledgement (NACK) information being included in the block ACK bitmap corresponds to information corresponding to the plurality of TIDs.

The compressed bitmap field 540-3 may include information indicating whether or not the ACK/NACK information included in the block ACK bitmap corresponds to compressed ACK/NACK information (or whether or not the block ACK bitmap corresponds to A-MSDU unit ACK/NACK).

The groupcast with retries (GCR) field 540-4 may include information indicating whether or not the block ACK frame has been transmitted as a response to the GCR block ACK request frame.

The type of the block ACK frame may be indicated by the TID field 540-2, the compressed bitmap field 540-3, and the GCR field 540-4.

According to the embodiment of the present invention, the reserved field 540-5 may include buffer status information. The buffer status information may include information on uplink data that are buffered to the STA. For example, the buffer status information may correspond to information indicating the presence or absence of uplink data that are buffered to the STA. As another example, the buffer status information may include information on a size of uplink data that are buffered to a queue per access category and a backoff count per access category.

The reserved field 540-5 may be defined as an 8-bit field, and the buffer status information may be transmitted based on 8 bits. In case the reserved field 540-5 includes the buffer status information, the term buffer status information field may be used instead of the term reserved field.

The TID_INFO field 540-6 may include information on a TID that is associated with the block ACK frame.

The BA information field 550 may include a block ACK start sequence control field 550-1 and a block ACK bitmap field 550-2.

The block ACK start sequence control field 550-1 may include information on a sequence number of a first MSDU (or A-MSDU) corresponding to the ACK/NACK information that is included in the block ACK frame.

The block ACK bitmap field 550-2 may include ACK/NACK information corresponding to a plurality of MSDUs (or A-MSDUs).

The FCS 560 may include information for checking for any errors generated in the block ACK frame.

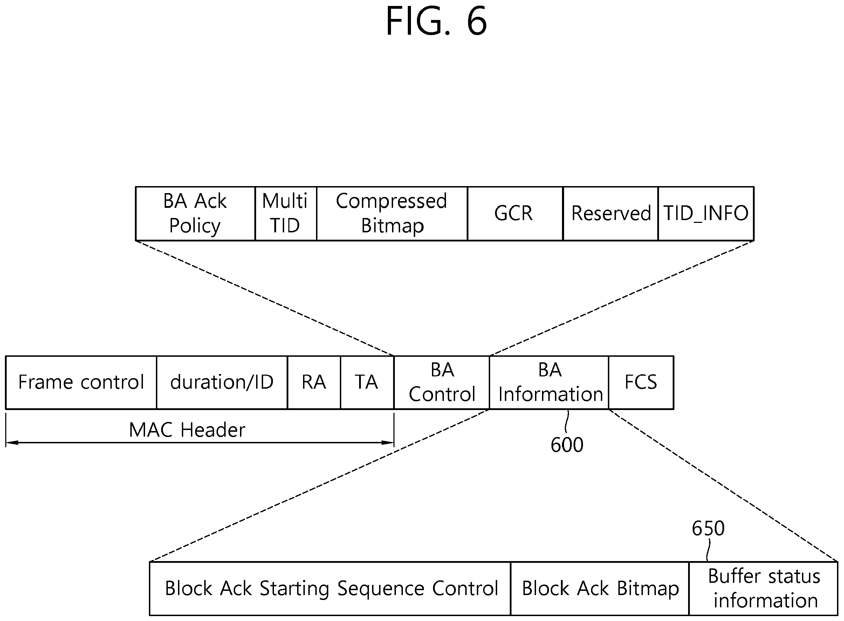

FIG. 6 is a conceptual view illustrating a block ACK frame according to an embodiment of the present invention.

FIG. 6 discloses a method for transmitting buffer status information through a BA information field 600. Fields that are not separately described in FIG. 6 may be used for the same purposes that are described above in FIG. 5.

Referring to FIG. 6, buffer status information may be additionally included in the BA information field 600.

For example, the BA information field 600 may include a block ACK start sequence control field and a block ACK bitmap field and a buffer status information field 650, and buffer status information may be transmitted through the additionally added buffer status information field 650.

For backward compatibility, the legacy AP (or legacy STA) may also acquire ACK/NACK information through a newly defined block ACK frame including the buffer status information. The legacy AP may correspond to an AP that supports a wireless LAN system corresponding to a previous version that is unaware of the transmission of the buffer status information through the block ACK frame.

If the length of the BA information field becomes longer due to the buffer status information field, a problem may occur in the interpretation of the block ACK frame by the legacy AP. More specifically, since the length of the received BA information field is longer than the length of the expected BA information field, the legacy AP may interpret the buffer status field information field that is transmitted after the block ACK bitmap field corresponding to the expected length as the FCS and may perform decoding accordingly.

Therefore, in order to resolve the problem occurring in the interpretation of the block ACK frame of the conventional legacy AP (or legacy STA), the lengths of the plurality of fields being included in the conventionally defined block ACK frame may be equally maintained. However, in this case, the block ACK frame including the buffer status information is required to be defined by using a method of changing the information content included in a particular field.

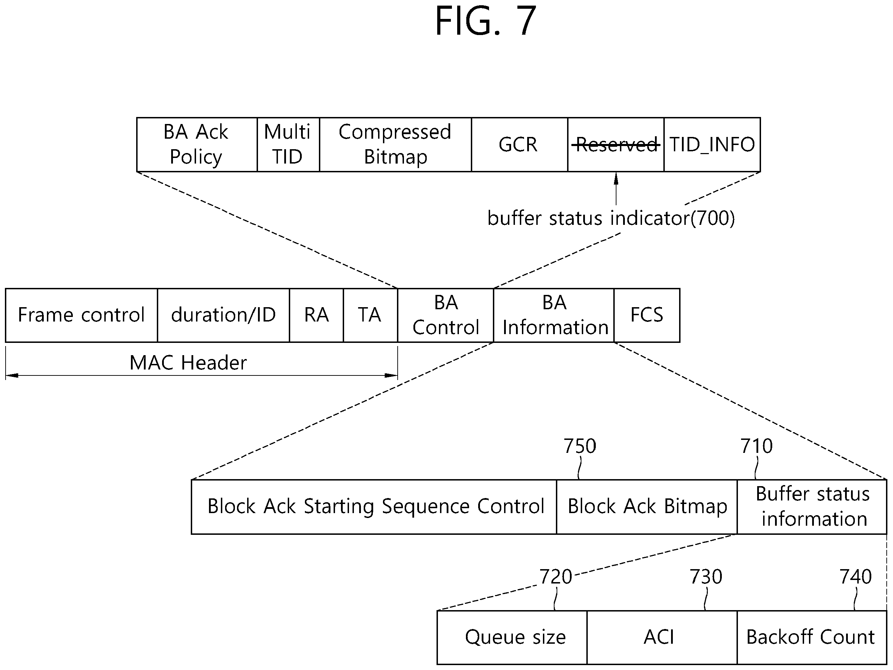

FIG. 7 is a conceptual view illustrating a block ACK frame according to an embodiment of the present invention.

FIG. 7 discloses a method for transmitting buffer status information through a BA information field. Most particularly, FIG. 7 discloses a block ACK frame including buffer status information without changing the length that is defined for the structure of the conventional block ACK frame. Fields that are not separately described in FIG. 7 may be used for the same purposes that are described above in FIG. 5.

Referring to FIG. 7, a reserved field that is included in a BA control field of the block ACK frame may include a buffer status indicator 700. The buffer status indicator 700 may indicate whether or not the block ACK frame included the buffer status information. In other words, the buffer status indicator 700 may indicate whether or not, among the bits that are defined for the block ACK bitmap of the BA information field of the block ACK frame, some of the bits are being used for the transmission of the buffer status information. In other words, the buffer status indicator 700 may indicate whether or not the buffer status information field 710 is included in the BA information field of the block ACK frame.

For example, the buffer status indicator 700 may correspond to a 1-bit field, and in case the value of the buffer status indicator 700 is equal to 1, the buffer status indicator 700 may indicate that the buffer status information field 710 is included in the block ACK frame. Conversely, in case the value of the buffer status indicator 700 is equal to 0, the buffer status indicator 700 may indicate that the buffer status information field 710 is not included in the block ACK frame.

According to the embodiment of the present invention, in case the buffer status indicator 700 does not indicate that the buffer status information field 710 is included in the block ACK frame, the block ACK bitmap that is included in the BA information field may transmit ACK/NACK information over all of the bytes (e.g., 8 bytes) that were conventionally allocated for the block ACK bitmap.

In case the buffer status indicator 700 indicates that the buffer status information field 710 is included in the block ACK frame, the block ACK bitmap that is included in the BA information field may use only part of the bytes (e.g., 5 bytes), among the bytes (e.g., 8 bytes) that were conventionally allocated for the block ACK bitmap for transmitting the ACK/NACK information. The remaining bytes (e.g., 3 bytes) may be used for transmitting the buffer status information field including the buffer status information. The block ACK bitmap field having its size reduced (or the down-sized block ACK bitmap field) may also be expressed by using the term reduced block ACK bitmap field 750.

The buffer status information field 710 may include a queue size field 720, an ACI field 730, and a backoff count field 740.

The queue size field 720 may include information on the size of a MSDU (or A-MSDU) that is buffered to the STA.

Alternatively, the queue size field 720 may include information on a size of uplink data that are buffered to each queue per access category. For example, the uplink data may be classified by 4 different access categories (e.g., best effort (AC_BE), background (AC_BK), video (AC_VI), and voice (AC_VO)), and the queue size field 720 may include information on a size of buffered uplink data corresponding to AC_BE, information on a size of buffered uplink data corresponding to AC_BK, information on a size of buffered uplink data corresponding to AC_VI, and information on a size of buffered uplink data corresponding to AC_VO.

The ACI field 730 may include information on an index of an access category. Indexes indicating each of AC _BE, AC _BK, AC _VI, and AC VO may be included in the ACI field 730.

The backoff count field 740 may include information on the value of the backoff count per access category. More specifically, the backoff count field 740 may include information on a backoff count corresponding to AC _BE, information on a backoff count corresponding to AC _BK, information on a backoff count corresponding to AC_VI, and information on a backoff count corresponding to AC VO.

More specifically, the buffer status information field 710 according to the embodiment of the present invention may include information on a size of uplink data that are buffered per access category and a backoff count per access category. The above-described buffer status information field 710 is merely exemplary, and, therefore, the buffer status information may be diversely defined in order to transmit the information corresponding to the buffered uplink data. For example, the buffer status information may indicate only information on the presence or absence of buffered uplink data.

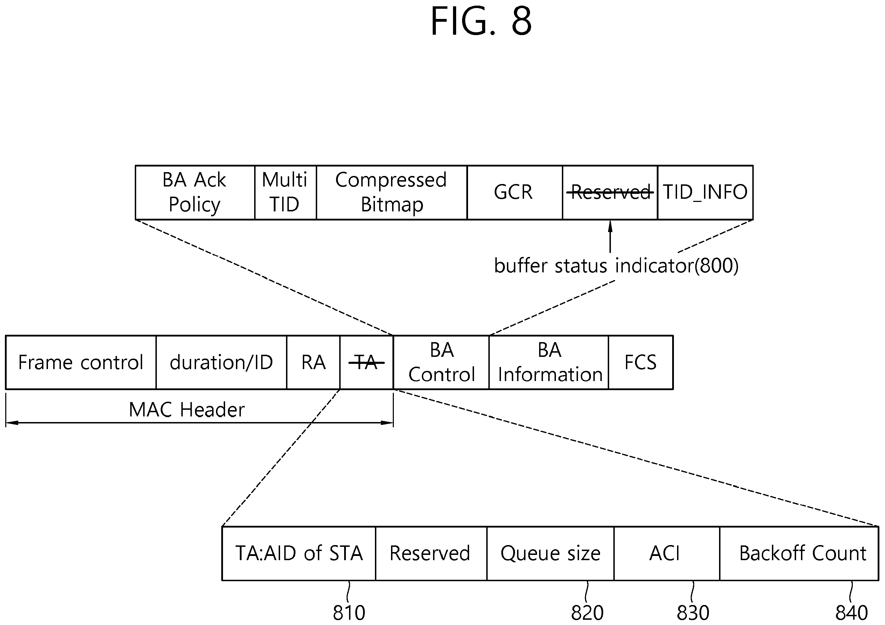

FIG. 8 is a conceptual view illustrating a block ACK frame according to an embodiment of the present invention.

FIG. 8 discloses a method for transmitting buffer status information through a TA field or an RA field. Similarly, FIG. 8 discloses a block ACK frame including buffer status information without changing the length that is defined for the structure of the conventional block ACK frame. Fields that are not separately described in FIG. 8 may be used for the same purposes that are described above in FIG. 5.

In the legacy block ACK frame, the RA field may include identification information (e.g., medium access control (MAC) address) of a receiving end (e.g., AP) receiving the block ACK frame, and the TA field may include identification information (MAC address) of a transmitting end (e.g., STA) transmitting the block ACK frame. The AP receiving the block ACK frame is informed of the transmission of the block ACK frame from the STA that has received the downlink frame based on a predetermined interframe space from the downlink frame. Therefore, the AP may receive and decode the block ACK frame even without the RA field and the TA field.

Accordingly, the buffer status information may be transmitted by using bits that are allocated to the RA field and/or TA field of the conventional block ACK frame. Although FIG. 8 discloses the transmission of the buffer status information through the TA field for convenience in the description, transmission of the buffer status information through the RA field is also possible.

Referring to FIG. 8, a reserved field that is included in the BA control field of the block ACK frame may include a buffer status indicator 800. The buffer status indicator 800 may indicate whether or not the block ACK frame included the buffer status information. In other words, the buffer status indicator 800 may indicate whether or not, among the bits that are defined for the block ACK bitmap of the BA information field of the block ACK frame, some of the bits are being used for the transmission of the buffer status information.

According to the embodiment of the present invention, instead of the conventional TA field, a modified TA field 810, a reserved field, a queue size field 820, an ACI field 830, and a backoff count field 840 may be included in a MAC header.

The modified TA field 810 may include an association identifier (AID) of the STA. The AID may correspond to identification information that is being allocated to the STA by the AP during an association procedure between the STA and the AP. As identification information corresponding to 2 bytes, the AID may replace the MAC address of the STA corresponding to the conventional 6 bytes.

The reserved field may be reserved.

Each of the queue size field 820, the ACI field 830, and the backoff count field 840 may respectively include the same information as described above in FIG. 7.

Legacy (L)-signal (SIG) protection and request to send (RTS)/clear to send (CTS) protection may be used for protecting the TXOP of a PPDU carrying the downlink frame and the TXOP of a PPDU carrying the block ACK frame according to the embodiment of the present invention and for supporting backward compatibility with the legacy STA.

The L-SIG protection corresponds to a method of protecting a TXOP duration of a PPDU based on a length field of a L-SIG field that is included in the PPDU header. The RTS/CTS protection corresponds to a method of preventing access of a medium of another STA that has received the RTS frame/CTS frame by transmitting and receiving the RTS frame/CTS frame prior to receiving traffic data.

According to the embodiment of the present invention, a length field of the L-SIG field of the PPDU carrying the downlink data frame may be configured to have a value for protecting a TXOP duration for a downlink data frame and a block ACK frame, which is being transmitted as a response to the downlink data frame. The legacy STA may decode the L-SIG field of the PPDU carrying the downlink data frame and may then set up a network allocation vector (NAV), thereby being capable of interrupting access of a medium.

Similarly, according to the embodiment of the present invention, the TXOP duration for the downlink data frame and the block ACK frame that is being transmitted as a response to the downlink data frame may be protected based on the RTS frame/CTS frame.

In case the above-described L-SIG protection, RTS/CTS protection, and so on, are used, even in case the length of the block ACK frame becomes longer, any collision caused by the transmission of another frame by another STA when transmitting the block ACK frame may be prevented.

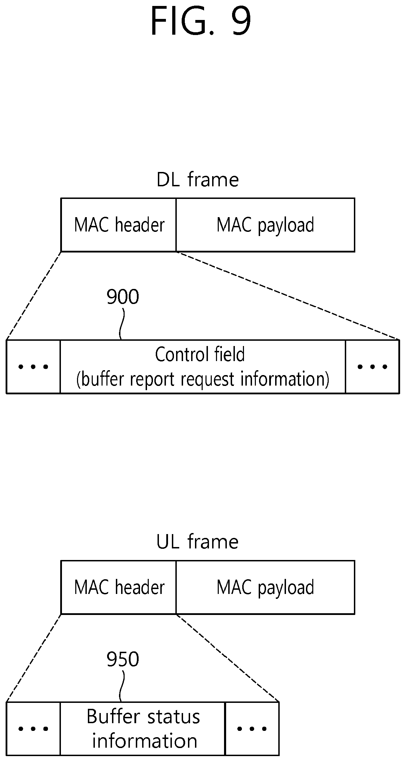

FIG. 9 is a conceptual view illustrating a method for triggering buffer status information according to an embodiment of the present invention.

FIG. 9 discloses diverse methods performed by the AP for triggering a report on the buffer status information.

Referring to FIG. 9, in order to receive the buffer status information from the STA, the AP may include information requesting a report on the buffer status information of the STA in its downlink frame. The information requesting the report on the buffer status information may also be expressed by using the term buffer status report request information.

For example, the buffer status report request information may be included in the header information. More specifically, the buffer status report request information may be included in a control field 900, such as a high efficiency (HE) control field or a quality of service (QoS) control field, which are defined in the MAC header, or may be included in a signal field (e.g., HE-signal (SIG) of the PPDU header.

The buffer status report request information may be transmitted through a downlink frame that is transmitted via downlink. For example, a report on the buffer status information may be requested based on the HE control field or the QoS control field of the downlink data frame including the buffer status report request information. Alternatively, a block ACK request (BAR) frame requesting the transmission of the block ACK frame may include the buffer status report request information. Alternatively, a report on the buffer status information of at least one STA may be triggered by the trigger frame. For example, the trigger frame may request a report on the buffer status information of at least one STA based on the control field that is configured in a null data packet (NDP) format and included in the header information without any MAC framebody.

As described above the STA, which has received the request for a report on the buffer status information, may report buffer status information 950 through the block ACK frame including the buffer status information, which is disclosed in the embodiment of the present invention. For example, the buffer status information 950 may be reported through the MAC header of the block ACK frame.

Moreover, the STA that has received a request to transmit a report on the buffer status information may transmit in a standalone mode a buffer status control frame (or buffer status report frame), which is separately defined for the transmission of the buffer status information. For example, the AP may transmit a trigger frame requesting a buffer status report to a plurality of STAs, and each of the plurality STAs may transmit the buffer status report through the buffer status control frame.

Additionally, the buffer status information may not only be transmitted through an independent uplink frame for reporting the buffer status information but may also be transmitted through an uplink frame along with other uplink information. For example, the buffer status information may be transmitted through an uplink data frame along with uplink traffic data.

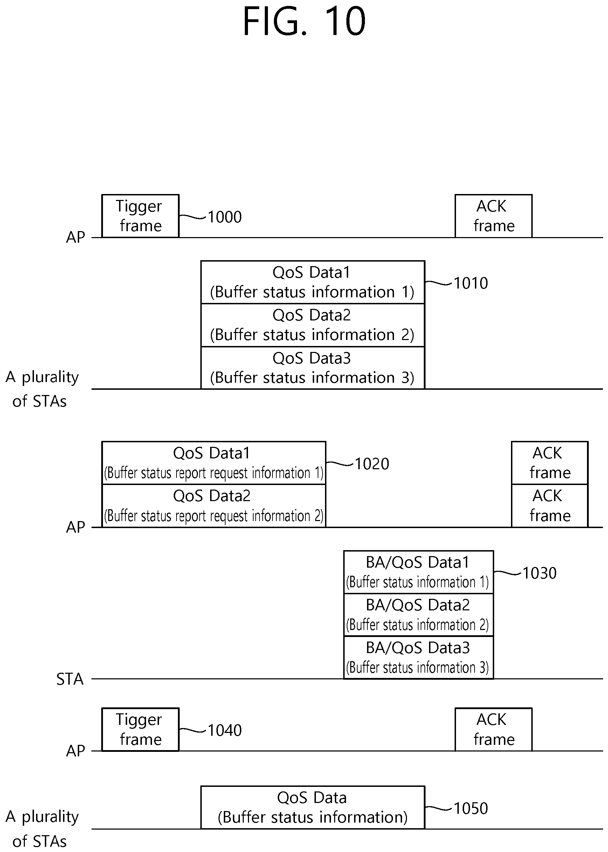

FIG. 10 is a conceptual view illustrating a method for transmitting buffer status information according to an embodiment of the present invention.

FIG. 10 discloses diverse methods for triggering a report on the buffer status information.

Referring to FIG. 10, the report on the buffer status information may be transmitted by a trigger frame 1000.

As described above in FIG. 9, the AP may transmit the trigger frame 1000 that triggers the report on the buffer status information to a plurality of STAs.

The trigger frame 1000 that triggers the buffer status information corresponding to each of the plurality of STAs may include information on each of a plurality uplink transmission resources to which the buffer status information corresponding to each of the plurality of STAs is to be respectively transmitted.

For example, the AP may transmit the trigger frame 1000 to each of STA1, STA2, and STA3 and may respectively trigger a report on the buffer status information. In this case, the trigger frame 1000 may include information on the uplink transmission resource corresponding to each of STA1, STA2, and STA3 for the report on the buffer status information corresponding to each of STA1, STA2, and STA3.

Each of the plurality of the STAs may transmit buffer status information based on the trigger frame 1000. More specifically, each of the STAs may transmit the buffer status information by using an uplink frame 1010 including the buffer status information through an uplink resource that is allocated based on the trigger frame. In other words, the plurality of STAs may deliver (or carry) a plurality of uplink frames including the buffer status information through a UL MU PPDU.

The AP may transmit an ACK frame to the plurality of STAs as a response to the uplink frame 1010 including the buffer status information.

According to another embodiment of the present invention, the AP may also request for a report on the buffer status information not only through the trigger frame but also through a downlink frame 1020 including buffer status report request information.

For example, a plurality of downlink data frames 1020 included the buffer status report request information may be delivered (or carried) to the plurality of STAs through the DL MU PPDU. The plurality of STAs may deliver (or carry) the plurality of BA frames including the buffer status information or a plurality of uplink frames 1030 including the buffer status information to the AP as a response to the DL MU PPDU.

The AP may transmit the block ACK frame corresponding to the plurality of uplink frames including the buffer status information to the plurality of STAs.

According to yet another embodiment of the present invention, the AP may transmit a trigger frame 1040 for triggering the buffer status information to one STA. The one STA may receive the trigger frame and may transmit an uplink frame 1050 including the buffer status information to the AP. As described above, the uplink frame including the buffer status information may correspond to a buffer status control frame that is defined for the report on the buffer status information, or the uplink frame may also correspond to an uplink frame including other uplink information in addition to the buffer status information.

The AP may transmit an ACK frame corresponding to the uplink frame including the buffer status information to the STA.

According to the embodiment of the present invention, the AP may request buffer status information that is related to all TIDs or may optionally request buffer status information that is related to part of the TIDs. Alternatively, the AP may request buffer status information that is related to all access categories or may request buffer status information that is related to part of the access categories.

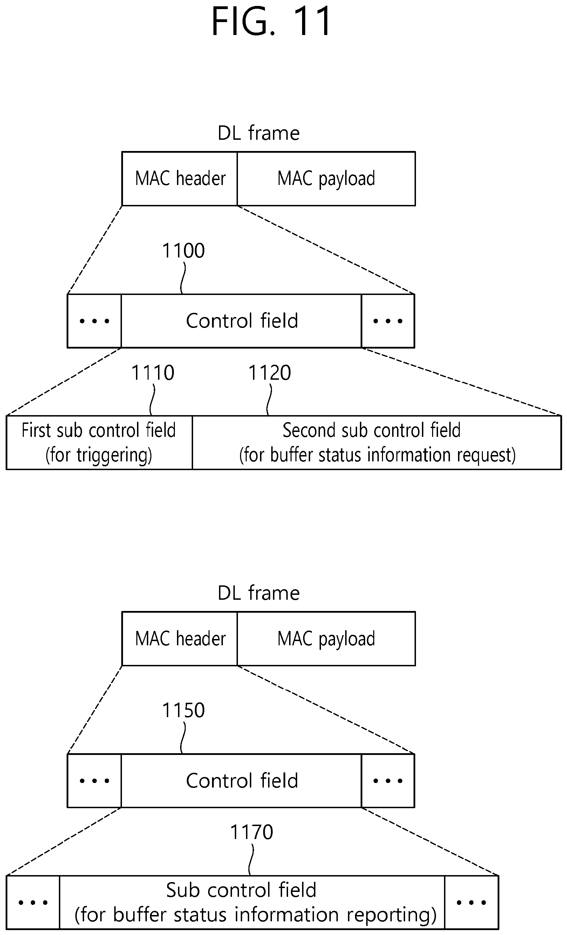

FIG. 11 is a conceptual view illustrating a frame structure according to an embodiment of the present invention.

FIG. 11 discloses a method for requesting buffer status information through a control field of the MAC header and performing a report on the buffer status information. The control information may correspond to a QoS control field or HE control field (or high throughput (HT) control field) of the MAC header. Although FIG. 11 discloses a method for requesting buffer status information and performing a report on the buffer status information to the HE control field for simplicity in the description, the request of the buffer status information and the report on the buffer status information may be performed through another MAC header field.

Description of the fields that are not additionally described is disclosed in 8.2.3 General frame format of IEEE P802.11-REVmcTM/D3.1, August 2014 Draft Standard for Information technology Telecommunications and information exchange between systems Local and metropolitan area networks Specific requirements Part 11: Wireless LAN Medium Access Control (MAC) and Physical Layer (PHY) Specifications.

Referring FIG. 11, the control field (e.g., HE control field) 1100 may control at least one sub control field 1110 and 1120, and the buffer status information may be requested based on the at least one sub control field 1110 and 1120, and, then, the buffer status information may be reported. The sub control field 1110 and 1120 may be configured of identification information for identifying the sub control field and control content information of the sub control field.

For example, the AP may transmit a trigger frame including the control field 1100, which includes a first sub control field 1110 for triggering a report on the buffer status information and a second sub control field 1120 including information for reporting the buffer status information, to at least one STA. In this case, as described above, the trigger frame may have an NDP format that does not include a MAC framebody.

The STA may know (or be informed of) the triggering of the report on the buffer status information of the AP based on the control field 1100 of the downlink frame that is transmitted by the AP. The STA may transmit the buffer status information based on the triggering of the report on the buffer status information. The STA may transmit a sub control field 1170 of the control field (e.g., HE control field) 1150 of the uplink frame including the buffer status information for notifying (or informing) the transmission of the buffer status information to the AP. More specifically, the buffer status information may be transmitted through a MAC header (e.g., control field) being included in the uplink frame. For example, the above-described buffer status report control frame or the uplink frame including the buffer status information may transmit the buffer status information through the sub control field 1170 being included in the control field 1150.

More specifically, according to the embodiment of the present invention, the request for buffer status information and report on the buffer status information may be performed based on a combination of sub control fields being included in the control field. Not only the request for the buffer status information and the report on the buffer status information but also a request for a block ACK frame may be transmitted (or performed) through the sub control fields being included in the control field based on diverse combinations, and the block ACK information may also be transmitted through the sub control field.

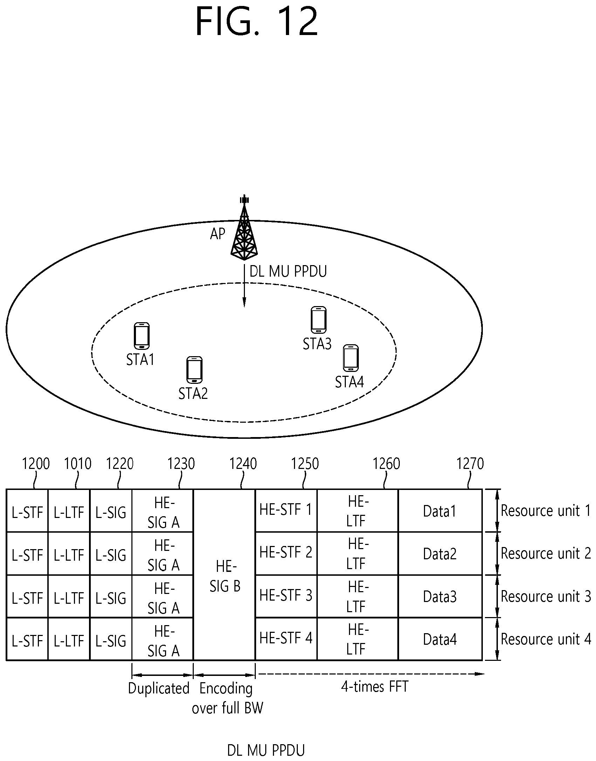

FIG. 12 is a conceptual view illustrating a DL MU PPDU format according to an embodiment of the present invention.

FIG. 12 discloses a DL U PPDU format that is transmitted by the AP based on OFDMA according to the embodiment of the present invention.

Referring to FIG. 12, a PPDU header of a DL MU PPDU may include a legacy-short training field (L-STF), a legacy-long training field (L-LTF), a legacy-signal (L-SIG), a high efficiency-signal A (HE-SIG A), a high efficiency-signal B (HE-SIG B), a high efficiency-short training field (HE-STF), a high efficiency-long training field (HE-LTF), and a data field (or MAC payload). The PPDU may be divided into a legacy part, which consists of a part starting from the PHY header to the L-SIG, and a high efficiency (HE) part, which consists of a part after the L-SIG.

The L-STF 1200 may include a short training orthogonal frequency division multiplexing (OFDM) symbol. The L-STF 1200 may be used for frame detection, automatic gain control (AGC), diversity detection, and coarse frequency/time synchronization.

The L-LTF 1210 may include a long training orthogonal frequency division multiplexing (OFDM) symbol. The L-LTF 1210 may be used for fine frequency/time synchronization and channel prediction.

The L-SIG 1220 may be used for transmitting control information. The L-SIG 1220 may include information on data transmission rate, data length, and so on.

The HE-SIG A 1230 may also include identification information for indicating a target STA that is to receive the DL MU PPDU. For example, the HE-SIG A 1230 may include an identifier of a specific STA (or AP) that is to receive the PPDU and information for indicating a group of specific STAs. Also, in case the DL MU PPDU is transmitted based on OFDMA or MIMO, the HE-SIG A 1230 may also include resource allocation information for the reception of the DL MU PPDU by the STA.

Additionally, the HE-SIG A 1230 may also include color bits information for BSS identification information, bandwidth information, tail bit, CRC bit, modulation and coding scheme (MCS) information on the HE-SIG B 1240, information on the number of symbols for the HE-SIG B 1240, and cyclic prefix (CP) (or guard interval (GI)) length information.

The HE-SIG B 1240 may include information on a length modulation and coding scheme (MCS) of a physical layer service data unit (PSDU) for each STA and a tail bit, and so on. Additionally, the HE-SIG B 1240 may also include information on the STA that is to receive the PPDU and resource allocation information based on OFDMA (or MU-MIMO information). In case the resource allocation information based on OFDMA (or MU-MIMO information) is included in the HE-SIG B 1240, the resource allocation information may not be included in the HE-SIG A 1230.

For example, resource allocation information corresponding to each of the plurality of uplink frames for transmitting the buffer status information of each of the plurality of STAs may be included in the HE-SIG A 1230/HE-SIG B 1240 of the PPDU (or DL MU PPDU) delivering (or carrying) the trigger frame triggering the above-described buffer status information and the downlink frame including the buffer status report request information.

The fields before the HE-SIG B 1240 within the DL MU PPDU may each be transmitted from different transmission resources in a duplicated format. In case of the HE-SIG B 1240, the HE-SIG B 1240 being transmitted from part of the resource units (e.g., resource unit 1 and resource unit 2) may correspond to an independent field including separate information, and the HE-SIG B 1240 being transmitted from the remaining resource units (e.g., resource unit 3 and resource unit 4) may correspond to a duplicated format of the HE-SIG B 1240, which is transmitted from another resource unit (e.g., resource unit 1 and resource unit 2). Alternatively, the HE-SIG B 1240 may be transmitted in an encoded format within all of the transmission resources. And, the fields after the HE-SIG B 1240 may include separate information for each of the plurality of STAs receiving the PPDU.

The HE-STF 1250 may be used for enhancing automatic gain control estimation in a multiple input multiple output (MIMO) environment or an OFDMA environment.

More specifically, STA1 may receive HE-STF1, which is transmitted from the AP through resource unit1 and may then perform synchronization, channel tracking/estimation, and AGC, thereby being capable of decoding data field1. Similarly, STA2 may receive HE-STF2, which is transmitted from the AP through resource unit2 and may then perform synchronization, channel tracking/estimation, and AGC, thereby being capable of decoding data field2. STA3 may receive HE-STF3, which is transmitted from the AP through resource unit3 and may then perform synchronization, channel tracking/estimation, and AGC, thereby being capable of decoding data field3. And, STA4 may receive HE-STF4, which is transmitted from the AP through resource unit4 and may then perform synchronization, channel tracking/estimation, and AGC, thereby being capable of decoding data field4.

The HE-LTF 1260 may be used for estimating a channel in a MIMO environment or an OFDMA environment.

The inverse fast fourier transform (IFFT) size being applied to the HE-STF 1250 and the field after the HE-STF 1250 may be different from the IFFT size being applied to the field before the HE-STF 1250. For example, the IFFT size being applied to the HE-STF 1250 and the field after the HE-STF 1250 may be 4 times larger than the IFFT size being applied to the field before the HE-STF 1250. In case the STA may receive the HE-SIG A 1230 and may receive indication to receive a downlink PPDU based on the HE-SIG A 1230. In this case, the STA may perform decoding based on the HE-STF 1250 and the FFT size that is changed starting from the field after the HE-STF 1250. Conversely, in case the STA fails to receive indication to receive the downlink PPDU based on the HE-SIG A 1230, the STA may stop the decoding process and may perform network allocation vector (NAV) configuration. A cyclic prefix (CP) of the HE-STF 1250 may have a size that is larger than the CP of other fields, and, during such CP period, the STA may change the FFT size and may perform decoding on the downlink PPDU.

The access point (AP) may allocate each of the plurality of the wireless resources to each of the plurality of stations (STAs) within the entire bandwidth and may transmit a physical protocol data unit (PPDU) to each of the plurality of STAs through each of the wireless resources. As described above, the information on the allocation to each of the plurality of wireless resources corresponding to each of the plurality of STAs may be included in the HE-SIG A 1250 or the HE-SIG B 1260.

At this point, each of the plurality of resource units may correspond to a combination of a plurality of wireless resource units (BTU, STU) that are defined to have different sizes within the frequency axis. As described above, the resource allocation combination may correspond to a combination of at least one resource unit that can be allocated within an entire available tone according to the bandwidth size.

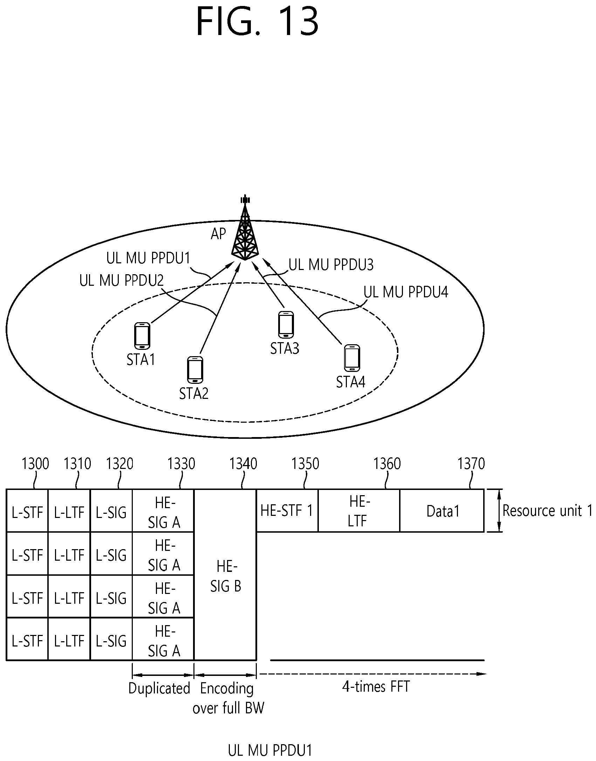

FIG. 13 is a conceptual view illustrating a transmission of a UL MU PPDU according to an embodiment of the present invention.

Referring to FIG. 13, a plurality of STAs may transmit a UL MU PPDU to the AP based on UL MU OFDMA.

The L-STF 1300, the L-LTF 1310, the L-SIG 1320, the HE-SIG A 1330, and the HE-SIG B 1340 may perform the functions, which are disclosed in FIG. 12. The information that is included in the signal field (L-SIG 1320, HE-SIG A 1330, and HE-SIG B 1340) may be generated based on the information included in the signal field of the received DL MU PPDU.

STA1 may perform uplink transmission through the entire bandwidth up to HE-SIG B 1340, and, then, STA1 may perform uplink transmission through the allocated bandwidth starting from HE-STF 1350. STA1 may deliver (or carry) an uplink frame through the allocated bandwidth (e.g., resource unit1) based on a UL MU PPDU. The AP may allocate an uplink resource corresponding to each of the plurality of STAs based on a DL MU PPDU (e.g., HE-SIG A/B), and each of the plurality of STAs may receive the corresponding uplink resource and then transmit a UL MU PPDU.

As described above, each of the plurality of STAs may transmit buffer status information and information related to the block ACK through the control field of the MAC header or the MAC framebody included in the data field.

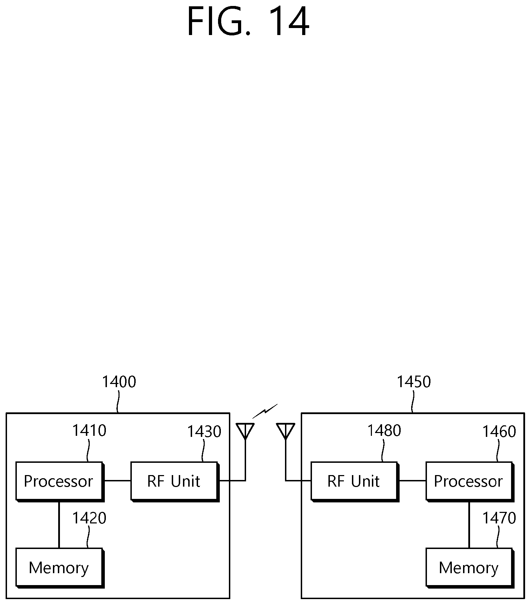

FIG. 14 is a block view illustrating a wireless device to which the embodiment of the present invention can be applied.

Referring to FIG. 14, as an STA that can implement the above-described embodiment, the wireless device 1400 may correspond to an AP 1400 or a non-AP station (STA) 1450.

The AP 1400 includes a processor 1410, a memory 1420, and a radio frequency (RF) unit 1430.

The RF unit 1430 is connected to the processor 1410, thereby being capable of transmitting and/or receiving radio signals.

The processor 1410 implements the functions, processes, and/or methods proposed in the present invention. For example, the processor 1410 may be implemented to perform the operations of the AP according to the above-described embodiments of the present invention. The processor may perform the operations of the AP, which are disclosed in the embodiments of FIG. 1 to FIG. 13.

For example, the processor 1410 may transmit a downlink frame including the buffer status report request information to a plurality of STAs and may respectively receive a plurality of uplink frames from each of the plurality of STAs within an overlapping time resource. At this point, each of the plurality of uplink frames may respectively include buffer status information corresponding to each of the plurality of STAs that is generated based on the buffer status report request information. Also, the processor 1410 may be configured to determine the uplink transmission resource that is to be allocated to each of the plurality of STAs based on the corresponding buffer status information.

As described above, the downlink frame may correspond to a trigger frame triggering the transmission of each set of the buffer status information, and the buffer status report request information may be included in the control field of the MAC header of the trigger frame, and each set of the buffer status information may be included in each of the plurality of MAC headers respectively included in each of the plurality of uplink frames.

As described above, the downlink frame may correspond to a data frame, and the buffer status report request information may be included in a control field of the MAC header of the trigger frame, and the plurality of uplink frames may correspond to a plurality of block ACK frames corresponding to the downlink frame, and each of the plurality of MAC headers being respectively included in each of the plurality of block ACK frames may include a set of buffer status information.

The STA 1450 includes a processor 1460, a memory 1470, and a radio frequency (RF) unit 1480.

The RF unit 1480 is connected to the processor 1460, thereby being capable of transmitting and/or receiving radio signals.

The processor 1460 implements the functions, processes, and/or methods proposed in the present invention. For example, the processor 1460 may be implemented to perform the operations of the STA according to the above-described embodiments of the present invention. The processor may perform the operations of the STA, which are disclosed in the embodiments of FIG. 1 to FIG. 13.

For example, the processor 1460 may be configured to receive a trigger frame/uplink frame including the buffer status report request information, and to transmit a block ACK frame including buffer status information/uplink data frame to the AP based on the trigger frame/uplink frame including the buffer status report request information.

The processor 1410 and 1460 may include an application-specific integrated circuit (ASIC), another chip set, a logical circuit, a data processing device, and/or a converter converting a baseband signal and a radio signal to and from one another. The memory 1420 and 1470 may include a read-only memory (ROM), a random access memory (RAM), a flash memory, a memory card, a storage medium, and/or another storage device. The RF unit 1430 and 1480 may include one or more antennas transmitting and/or receiving radio signals.

When the embodiment is implemented as software, the above-described method may be implemented as a module (process, function, and so on) performing the above-described functions. The module may be stored in the memory 1420 and 1470 and may be executed by the processor 1410 and 1460. The memory 1420 and 1470 may be located inside or outside of the processor 1410 and 1460 and may be connected to the processor 1410 and 1460 through a diversity of well-known means.

## Claims

1. A method for receiving buffer status information in a wireless local area network, WLAN, the method comprising:
transmitting, by an access point, AP, to multiple stations, STAs, a trigger frame (1000) soliciting first information on the buffer status information in each of the multiple STAs,
wherein the trigger frame includes second information on each of multiple uplink, UL, transmission resources allocated for each respective STA of the multiple of STAs; and
receiving, by the AP, multiple UL frames (1010) based on the second information from the multiple STAs within an overlapping time resource in response to the trigger frame,
wherein each of the multiple UL frames includes the first information for each of the multiple STAs.

2. An access point, AP, (1400) receiving buffer status information in a wireless local area network, WLAN, the AP comprising:
a radio frequency, RF, unit (1430) transmitting and receiving radio signals; and
a processor (1410) being operatively connected to the RF unit,
wherein the processor (1410) is configured:
to transmit to multiple stations, STAs, a trigger frame (1000) soliciting first information on the buffer status information in each of the multiple STAs,
wherein the trigger frame includes second information on each of multiple uplink, UL, transmission resources allocated for each respective STA of the multiple of STAs; and
to receive multiple UL frames (1010) based on the second information from the multiple STAs within an overlapping time resource in response to the trigger frame,
wherein each of the multiple UL frames includes the first information for each of the multiple STAs.

3. A method for transmitting buffer status information in a wireless local area network, WLAN, the method comprising:
receiving, by a station, STA, from an access point, AP , a trigger frame (1000),
wherein the trigger frame (1000) is transmitted to multiple STAs,
wherein the trigger frame (1000) solicits first information on the buffer status information in each of the multiple STAs,
wherein the trigger frame (1000) includes second information on each of multiple uplink, UL, transmission resources allocated for each respective STA of the multiple STAs; and
transmitting, by the STA to the AP, a UL frame based on the second information,
wherein multiple UL frames (1010) including the UL frame are transmitted based on the second information from the multiple STAs within an overlapping time resource in response to the trigger frame,
wherein each of the multiple UL frames includes the first information for each of the multiple STAs.

## Patentansprüche

1. Verfahren zum Empfangen von Pufferzustandsinformationen in einem drahtlosen lokalen Netzwerk, WLAN, wobei das Verfahren aufweist:
Übertragen eines Auslöserrahmens (1000) an mehrere Stationen, STAs, der erste Informationen über die Pufferzustandsinformationen in jeder der mehreren STAs anfordert, durch einen Zugangspunkt, AP,
wobei der Auslöserrahmen zweite Informationen über jede der mehreren Uplink-, UL-, Übertragungsressourcen umfasst, die für jede jeweilige STA der mehreren STAs zugewiesen sind; und
basierend auf den zweiten Informationen von den mehreren STAs Empfangen mehrerer UL-Rahmen (1010) innerhalb einer überlappenden Zeitressource ansprechend auf den Auslöserrahmen durch den AP,
wobei jeder der mehreren UL-Rahmen die ersten Informationen für jede der mehreren STAs umfasst.

2. Zugangspunkt, AP, (1400), der Pufferzustandsinformationen in einem drahtlosen lokalen Netzwerk, WLAN, empfängt, wobei der AP aufweist:
eine Funkfrequenz, RF-, Einheit (1430), die Funksignale überträgt und empfängt; und
einen Prozessor (1410), der betriebsfähig mit der RF-Einheit verbunden ist,
wobei der Prozessor (1410) konfiguriert ist, um:
an mehrere Stationen, STAs, einen Auslöserrahmen (1000), der erste Informationen über die Pufferzustandsinformationen in jeder der mehreren STAs anfordert, zu übertragen,
wobei der Auslöserrahmen zweite Informationen über jede der mehreren Uplink-, UL-, Übertragungsressourcen umfasst, die für jede jeweilige STA der mehreren STAs zugewiesen sind; und
basierend auf den zweiten Informationen von den mehreren STAs mehrere UL-Rahmen (1010) innerhalb einer überlappenden Zeitressource ansprechend auf den Auslöserrahmen zu empfangen,
wobei jeder der mehreren UL-Rahmen die ersten Informationen für jede der mehreren STAs umfasst.

3. Verfahren zum Empfangen von Pufferzustandsinformationen in einem drahtlosen lokalen Netzwerk, WLAN, wobei das Verfahren aufweist:
Empfangen eines Auslöserrahmens (1000) durch eine Station, STA, von einem Zugangspunkt, AP,
wobei der Auslöserrahmen (1000) an mehrere STAs übertragen wird,
wobei der Auslöserrahmen (1000) erste Informationen über die Pufferzustandsinformationen in jeder der mehreren STAs anfordert,
wobei der Auslöserrahmen (1000) zweite Informationen über jede der mehreren Uplink-, UL-, Übertragungsressourcen umfasst, die für jede jeweilige STA der mehreren STAs zugewiesen sind; und
basierend auf den zweiten Informationen Übertragen eines UL-Rahmens an den AP durch die STA,
wobei basierend auf den zweiten Informationen mehrere UL-Rahmen (1010), die den UL-Rahmen umfassen, von den mehreren STAs innerhalb einer überlappenden Zeitressource ansprechend auf den Auslöserrahmen übertragen werden,
wobei jeder der mehreren UL-Rahmen die ersten Informationen für jede der mehreren STAs umfasst.

## Revendications

1. Procédé pour recevoir des informations d'état de tampon dans un réseau local sans fil, WLAN, le procédé comprenant :
la transmission, par un point d'accès, AP, à de multiples stations, STA, d'une trame de déclenchement (1000) sollicitant une première information sur les informations d'état de tampon dans chacune des multiples STA,
dans lequel la trame de déclenchement comporte une seconde information sur chacune de multiples ressources de transmission de liaison montante, UL, allouées pour chaque STA respective des multiples STA ; et
la réception, par l'AP, de multiples trames d'UL (1010) sur la base de la seconde information en provenance des multiples STA à l'intérieur d'une ressource temporelle chevauchante en réponse à la trame de déclenchement,
dans lequel chacune des multiples trames d'UL comporte la première information pour chacune des multiples STA.

2. Point d'accès, AP, (1400) recevant des informations d'état de tampon dans un réseau local sans fil, WLAN, l'AP comprenant :
une unité radiofréquence, RF, (1430) transmettant et recevant des signaux radio ; et
un processeur (1410) qui est connecté fonctionnellement à l'unité RF,
dans lequel le processeur (1410) est configuré :
pour transmettre à de multiples stations, STA, une trame de déclenchement (1000) sollicitant une première information sur les informations d'état de tampon dans chacune des multiples STA,
dans lequel la trame de déclenchement comporte une seconde information sur chacune de multiples ressources de transmission de liaison montante, UL, allouées pour chaque STA respective des multiples STA ; et
pour recevoir de multiples trames d'UL (1010) sur la base de la seconde information en provenance des multiples STA à l'intérieur d'une ressource temporelle chevauchante en réponse à la trame de déclenchement,
dans lequel chacune des multiples trames d'UL comporte la première information pour chacune des multiples STA.

3. Procédé pour transmettre des informations d'état de tampon dans un réseau local sans fil, WLAN, le procédé comprenant :
la réception, par une station, STA, en provenance d'un point d'accès, AP, d'une trame de déclenchement (1000),
dans lequel la trame de déclenchement (1000) est transmise à de multiples STA,
dans lequel la trame de déclenchement (1000) sollicite une première information sur les informations d'état de tampon dans chacune des multiples STA,
dans lequel la trame de déclenchement (1000) comporte une seconde information sur chacune de multiples ressources de transmission de liaison montante, UL, allouées pour chaque STA respective des multiples STA ; et
la transmission, par la STA à l'AP, d'une trame d'UL sur la base de la seconde information,
dans lequel de multiples trames d'UL (1010) comportant la trame d'UL sont transmises sur la base de la seconde information en provenance des multiples STA à l'intérieur d'une ressource temporelle chevauchante en réponse à la trame de déclenchement,
dans lequel chacune des multiples trames d'UL comporte la première information pour chacune des multiples STA.
